# EUROPÄISCHE PATENTANMELDUNG

(11) **EP 3 171 049 A1**
(43) Veröffentlichungstag der Anmeldung: **24.05.2017**
(21) Anmeldenummer: 15195098.7
(22) Anmeldetag: 18.11.2015
(51) Int. Cl.: F16D 33/00, F16D 47/06, F16D 39/00

(54) **KUPPLUNGSANORDNUNG**

(71) Anmelder: Ricardo Deutschland GmbH, 73529 Schwäbisch Gmünd (DE)
(72) Erfinder: Priwitzer, Günther Matthias, 74321 Bietigheim-Bissingen (DE)
(74) Vertreter: Schmid, Wolfgang

(57) **Zusammenfassung**

Eine Kupplungsanordnung (11) zur Verbindung eines Antriebsmotors (12) mit einem Getriebe (1), insbesondere einem wenigstens zwei Teilgetriebe (2,3) aufweisenden Getriebe (1), weist eine auf eine Getriebeeingangswelle (9) wirkende Kupplung (6) sowie eine parallel zu der Kupplung (6) wirkende hydrodynamische Kupplung (13) auf, die mittels einer Schalteinrichtung (14) mit der Getriebeeingangswelle (9) in Eingriff bringbar ist.

## Beschreibung

Die Erfindung betrifft eine Kupplungsanordnung zur Verbindung eines Antriebsmotors mit einem Getriebe, insbesondere einem wenigstens zwei Teilgetriebe aufweisenden Getriebe, mit einer auf eine Getriebeeingangswelle wirkenden Kupplung. Des Weiteren betrifft die Erfindung ein Getriebe mit wenigstens zwei Teilgetrieben.

Eine derartige Kupplungsanordnung sowie ein entsprechendes Getriebe sind aus der EP 2 878 856 A1 bekannt. Dabei ist eine Reibkupplung vorgesehen, die eine Motorausgangswelle mit einer ersten Getriebeeingangswelle verbindet. Eine zweite Getriebeeingangswelle umgeht die Reibkupplung und ist mit der Motorausgangswelle direkt verbunden. Wenn in dem mit der Reibkupplung verbundenen Teilgetriebe eine Gangstufe eingelegt wird und die Reibkupplung geöffnet ist, wird die Getriebeausgangswelle durch die die Reibkupplung umgehende, direkt mit der Motorausgangswelle verbundene Getriebeeingangswelle angetrieben. Beim Schließen der Reibkupplung wird die in dem direkt mit der Motorausgangswelle verbundenen Teilgetriebe eingelegte Gangstufe herausgenommen.

Dieses Getriebe stellt eine wesentliche Vereinfachung der an sich bekannten und weit verbreiteten Doppelkupplungsgetriebe dar. Ein Beispiel eines Doppelkupplungsgetriebes ist in der DE 198 53 824 A1 beschrieben. Allerdings macht die Ansteuerung des aus der EP 2 878 856 A1 bekannten Getriebes und insbesondere der Kupplungsanordnung desselben je nach Anforderung, insbesondere hinsichtlich des Schaltkomforts, einen gewissen Aufwand notwendig.

Es ist daher Aufgabe der vorliegenden Erfindung, eine Kupplungsanordnung zur Verbindung eines Antriebsmotors mit einem Getriebe, insbesondere einem wenigstens zwei Teilgetriebe aufweisenden Getriebe, zu schaffen, bei der mit einem geringen Steuerungsaufwand ein komfortabler Schaltvorgang möglich ist.

Erfindungsgemäß wird diese Aufgabe durch die in Anspruch 1 genannten Merkmale gelöst.

Durch die erfindungsgemäß parallel zu der Kupplung wirkende hydrodynamische Kupplung kann vorteilhafterweise ein sehr komfortabler Schaltvorgang bei geringem Steuerungsaufwand dargestellt werden.

Dabei kann durch das Vorhandensein der hydrodynamischen Kupplung das erstmalige Anfahren des mit dem Getriebe ausgestatteten Kraftfahrzeugs über die hydrodynamische Kupplung erfolgen, was zu einem sehr sanften Anfahren führt. Ein weiterer Vorteil des Einsatzes einer hydrodynamischen Kupplung ist deren Robustheit, obwohl, wie erwähnt, sehr komfortable Schaltvorgänge möglich sind.

Durch das parallele Vorhandensein der "normalen" Kupplung und der hydrodynamischen Kupplung wird das ansonsten bestehende Problem des verhältnismäßig schlechten Wirkungsgrads und des vorhandenen, geringfügigen Schlupfes der hydrodynamischen Kupplung umgangen, da die hydrodynamische Kupplung im Prinzip nur zum Anfahren benötigt wird. Selbstverständlich kann die hydrodynamische Kupplung auch für die folgenden Schaltvorgänge eingesetzt werden, was den Komfort derselben wesentlich erhöht. Ein grundsätzlicher Vorteil der erfindungsgemäßen Lösung besteht also darin, dass aufgrund des Vorhandenseins der Schalteinrichtung, mit der die hydrodynamische Kupplung mit der Getriebeeingangswelle in Eingriff gebracht werden kann, stets die für den jeweiligen Anwendungsfall besser geeignete Kupplung eingesetzt werden kann.

Um eine einfache Verbindung zwischen der hydrodynamischen Kupplung und der Getriebeeingangswelle herzustellen, kann in einer sehr vorteilhaften Weiterbildung der Erfindung vorgesehen sein, dass die Schalteinrichtung mehrere Eingriffselemente aufweist, welche zwischen einer eingerückten Stellung, in der die hydrodynamische Kupplung in Eingriff mit der Getriebeeingangswelle ist, und einer ausgerückten Stellung, in der die hydrodynamische Kupplung außer Eingriff mit der Getriebeeingangswelle ist, verstellbar sind.

Ein Umschalten der Schalteinrichtung mit Hilfe der Eingriffselemente ist möglich, wenn die Eingriffselemente in jeweilige Ausnehmungen eines Außenrings der Schalteinrichtung eingreifen.

Wenn dabei die Eingriffselemente als Klemmelemente ausgebildet sind, welche in jeweiligen Aussparungen eines Käfigs aufgenommen sind, so ist eine gute Führung der Eingriffselemente gewährleistet, um dieselben in ihrer Position zu halten.

Des Weiteren kann vorgesehen sein, dass die Klemmelemente als Rollen ausgebildet sind. Durch die Ausführung der Eingriffselemente als Rollen können diese einerseits eine Abrollbewegung ausführen und andererseits in der Ausnehmung in die jeweils erforderliche Position gebracht werden.

Um ein Verstellen des Käfigs und damit der darin aufgenommenen Eingriffselemente zu erreichen, kann des Weiteren vorgesehen sein, dass der Käfig wenigstens einen Vorsprung zum Eingreifen in wenigstens eine Aussparung in einem Schaltelement aufweist.

Um eine einfache Positionierung des Vorsprungs gegenüber dem Schaltelement zu erreichen, kann des Weiteren vorgesehen sein, dass die wenigstens eine Aussparung wenigstens zwei Abschnitte aufweist, wobei der wenigstens eine Vorsprung des Käfigs in Abhängigkeit einer axialen Position des Schaltelements zwischen den beiden Abschnitten beweglich ist..

Eine sehr einfache Ausführung des Vorsprungs ergibt sich, wenn derselbe als Nase ausgebildet ist.

Alternativ dazu ist es jedoch auch möglich, den wenigstens einen Vorsprung als Rolle auszuführen.

Des Weiteren kann vorgesehen sein, dass das Schaltelement als Ring ausgebildet ist und eine Innenverzahnung aufweist, welche mit einer Außenverzahnung des Außenrings der Schalteinrichtung in Eingriff bringbar ist. Auf diese Weise kann das Schaltelement sehr einfach und zuverlässig mit dem Außenring der Schalteinrichtung in Eingriff gebracht werden.

Wenn in einer weiteren vorteilhaften Ausführungsform das Schaltelement gegenüber dem Außenring in Axialrichtung beweglich ist, so kann die Aussparung in einfacher Weise in die gewünschte Position gebracht werden, um dadurch wiederum den Vorsprung des Käfigs zu positionieren.

Eine einfache Verstellung des Schaltelements ergibt sich, wenn dasselbe mittels hydraulischer Betätigung beweglich ist.

Wenn des Weiteren die Kupplung als Reibkupplung ausgebildet ist, so wird eine sichere Verbindung der Getriebeeingangswelle mit dem Antriebsmotor in den Situationen erreicht, in denen die hydrodynamische Kupplung nicht über die Schalteinrichtung mit der Getriebeeingangswelle verbunden ist.

Ein Getriebe mit wenigstens zwei Teilgetrieben, mit einer Getriebeeingangswelle und mit einer erfindungsgemäßen Kupplungsanordnung ist in Anspruch 14 angegeben.

Dieses Getriebe vereint die Vorteile des aus der EP 2 878 856 A1 bekannten Getriebes mit der erfindungsgemäßen Kupplungsanordnung, so dass sich ein sehr einfach ansteuerbares und einen hohen Schaltkomfort bietendes Getriebe ergibt.

In Anspruch 15 ist ein Verfahren zum Betreiben eines derartigen Getriebes angegeben.

Durch die erfindungsgemäß eingesetzte hydrodynamische Kupplung ergibt sich ein sehr sanft erfolgender Drehmomenteinsatz, was zu einem sehr hohen Schaltkomfort führt.

Nachfolgend ist ein Ausführungsbeispiel der Erfindung anhand der Zeichnung prinzipmäßig dargestellt.

Es zeigt:
- Fig. 1: eine sehr schematische Darstellung eines erfindungsgemäßen Getriebes mit einer ebenfalls sehr schematisch dargestellten Kupplungsanordnung;
- Fig. 2: eine detailliertere Darstellung der Kupplungsanordnung aus Fig. 1 mit einer hydrodynamischen Kupplung und einer Reibkupplung;
- Fig. 3: eine schematische Schnittdarstellung einer Schalteinrichtung zur Verbindung der hydrodynamischen Kupplung mit der Getriebeeingangswelle des Getriebes aus Fig. 1;
- Fig. 4: eine perspektivische Darstellung eines Käfigs der Schalteinrichtung aus Fig. 3; und
- Fig. 5: ein Schaltelement der erfindungsgemäßen Schalteinrichtung in einer perspektivischen Darstellung.

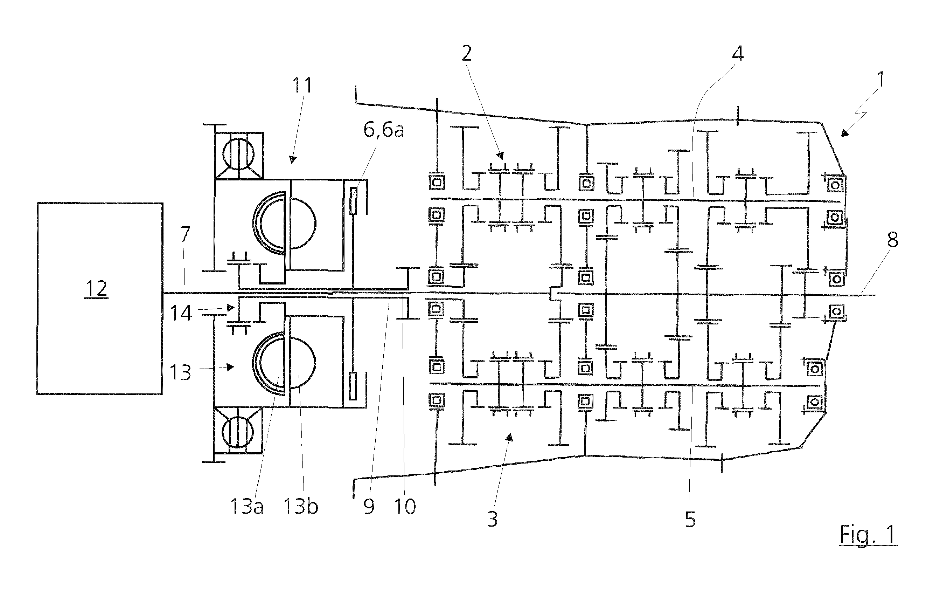

Fig. 1 zeigt ein Getriebe 1, dessen Aufbau und dessen Funktionsweise grundsätzlich aus der EP 2 878 856 A1 bekannt sind. Aus diesem Grund werden nachfolgend nur die wichtigsten Merkmale des Getriebes 1 beschrieben. So weist das Getriebe 1 zwei Teilgetriebe 2 und 3 auf, die wiederum jeweilige Teilgetriebewellen 4 und 5 aufweisen. Dabei ist die Teilgetriebewelle 4 dem ersten Teilgetriebe 2 zugeordnet, wohingegen die Teilgetriebewelle 5 dem zweiten Teilgetriebe 3 zugeordnet ist. Die beiden Teilgetriebe 2 und 3 sind unabhängig voneinander schaltbar, d. h. die jeweiligen Gangstufen der beiden Teilgetriebe 2 und 3 können unabhängig voneinander eingelegt werden. Grundsätzlich ist es daher möglich, dass in den beiden Teilgetrieben 2 und 3 jeweils eine Gangstufe eingelegt ist.

Das Getriebe 1 weist des Weiteren eine Kupplung 6 auf, die im vorliegenden Fall als Reibkupplung 6a ausgebildet ist und die dazu dient, die beim Wechsel zwischen zwei Gangstufen auftretenden Drehzahldifferenzen zwischen einer mit der Reibkupplung 6a verbundenen Motorausgangswelle 7 und einer aus dem Getriebe 1 herausführenden, in nicht dargestellter Weise mit einem Antrieb eines Kraftfahrzeugs, in dem das Getriebe 1 eingebaut ist, verbundenen Getriebeausgangswelle 8 zu überbrücken. Bei der Kupplung 6 kann es sich grundsätzlich um eine Trockenkupplung, eine Lamellenkupplung oder eine andere, in an sich bekannter Weise ausgebildete Kupplung handeln. Dabei ist auch der Einsatz einer in einem Ölbad laufenden Kupplung denkbar.

Des Weiteren weist das Getriebe 1 eine erste, von der Kupplung 6 ausgehende Getriebeeingangswelle 9 und eine die Kupplung 6 umgehende, mit der Motorausgangswelle 7 direkt verbundene zweite Getriebeeingangswelle 10 auf. In der schematischen Darstellung von Fig. 1 ist zu erkennen, dass die zweite Getriebeeingangswelle 10 koaxial in der als Hohlwelle ausgeführten ersten Getriebeeingangswelle 9 angeordnet ist. Die Teilgetriebewelle 4 des ersten Teilgetriebes 2 kann mit der ersten Getriebeeingangswelle 9 und/oder der zweiten Getriebeeingangswelle 10 in Wirkverbindung gebracht werden. Ebenso kann die Teilgetriebewelle 5 des zweiten Teilgetriebes 3 mit der zweiten Getriebeeingangswelle 10 und/oder der ersten Getriebeeingangswelle 9 in Wirkverbindung gebracht werden.

Wie bereits erwähnt werden die einzelnen Gangstufen sowie die Schaltelemente, mit denen die Gangstufen geschaltet bzw. betätigt werden, hierin nicht näher beschrieben, da die EP 2 878 856 A1 eine sehr detaillierte Beschreibung hiervon enthält. Grundsätzlich ist es jedoch möglich und zu bevorzugen, wenn formschlüssige, kraftbetätigte Schaltelemente, wie zum Beispiel Klauenkupplungen, eingesetzt werden.

Das Getriebe 1 weist des Weiteren eine Kupplungsanordnung 11 auf, die zur Verbindung eines in Fig. 1 sehr schematisch angedeuteten Antriebsmotors 12 mit dem Getriebe 1 dient. Die Kupplungsanordnung 11 weist die bereits oben beschriebene, als Reibkupplung 6a ausgebildete Kupplung 6 sowie eine parallel zu der Kupplung 6 wirkende hydrodynamische Kupplung 13 auf. Die hydrodynamische Kupplung 13 weist in an sich bekannter Weise eine Turbine 13a und eine Pumpe 13b auf. Da hinsichtlich des grundsätzlichen Aufbaus der hydrodynamischen Kupplung 13 auf an sich bekannte Lösungen zurückgegriffen werden kann, wird hierin nicht näher darauf eingegangen. Bei dem oben angeführten Einsatz einer nassen Lamellenkupplung als der Kupplung 6, wäre es auch möglich, das für die hydrodynamische Kupplung 13 eingesetzte Öl auch für die Kupplung 6 zu verwenden.

In Fig. 1 ist erkennbar, dass sowohl die hydrodynamische Kupplung 13 als auch die Reibkupplung 6a auf die erste Getriebeeingangswelle 9 wirken, wohingegen die zweite Getriebeeingangswelle 10 direkt mit der Motorausgangswelle 7 verbunden ist.

Die hydrodynamische Kupplung 11 kann mittels einer nachfolgend näher beschriebenen Schalteinrichtung 14 mit der ersten Getriebeeingangswelle 9 in Eingriff und außer Eingriff gebracht werden. Auf diese Weise kann die erste Getriebeeingangswelle 9 entweder über die hydrodynamische Kupplung 13 oder über die Reibkupplung 6a mit der Motorausgangswelle 7 verbunden werden. Dadurch kann zum Beispiel das Anfahren des Kraftfahrzeugs über die hydrodynamische Kupplung 13 vorgenommen werden. Bei späteren Gangwechseln, also dem Umschalten zwischen den beiden Teilgetrieben 2 und 3, können sowohl die Reibkupplung 6a als auch die hydrodynamische Kupplung 13 eingesetzt werden. Dies ermöglicht ein sehr komfortables Anfahren bzw. einen sehr komfortablen Schaltvorgang, während die Nachteile der hydrodynamischen Kupplung 13, insbesondere deren relativ schlechten Wirkungsgrad, vermieden werden.

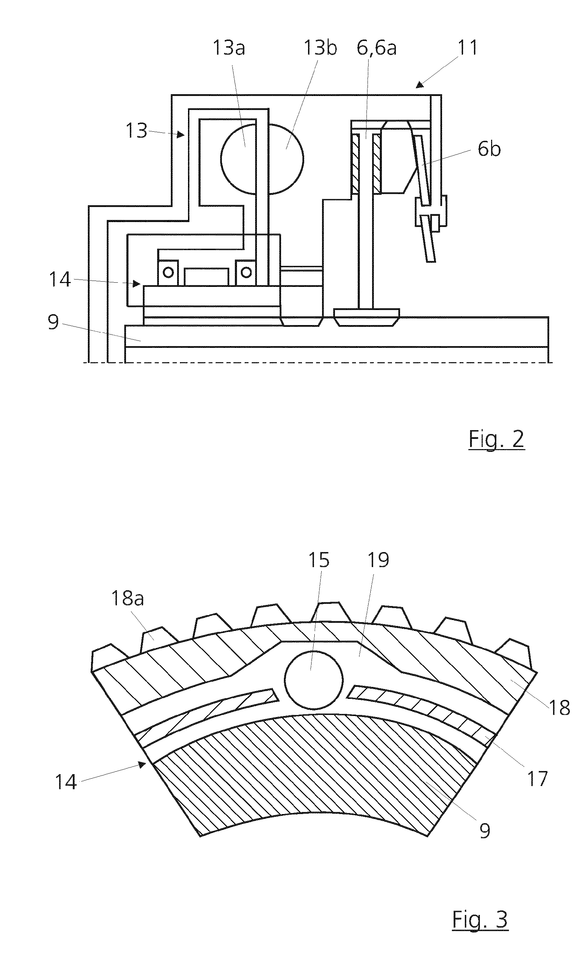

In Fig. 2 ist die Schalteinrichtung 14 detaillierter dargestellt. Die Schalteinrichtung 14 ist in der Art eines gesteuert schaltbaren Freilaufs ausgeführt und ist an ihrem Innendurchmesser mit der ersten Getriebeeingangswelle 9 und an ihrem Außendurchmesser mit der Turbine 13a der hydrodynamischen Kupplung 13 verbunden. Durch die Schalteinrichtung 14 wird eine reib- und formschlüssige Verbindung zwischen der hydrodynamischen Kupplung 13 und der ersten Getriebeeingangswelle 9 erzeugt. Grundsätzlich kann die Schalteinrichtung 14 auch in Form einer Klauenkupplung oder einer Synchronisierung ausgeführt sein, wobei die nachfolgend beschriebene schaltbare, bi-direktionale Rollenkupplung eine bevorzugte Ausführungsform darstellt. In Fig. 2 ist außerdem erkennbar, dass die Betätigung der Reibkupplung 6a über ein Betätigungselement 6b erfolgt. Grundsätzlich sind jedoch auch andere Betätigungen für die Reibkupplung 6a denkbar.

Wie in der detaillierteren Darstellung der Figuren 3, 4 und 5, in denen die Einzelteile der Schalteinrichtung 14 dargestellt sind, zu erkennen ist, weist die Schalteinrichtung 14 mehrere Eingriffselemente 15 auf, die im vorliegenden Fall als Klemmelemente 15a ausgebildet sind. Im dargestellten Ausführungsbeispiel handelt es sich bei den Klemmelementen 15a um Rollen 15a. Es sind jedoch auch andere Ausführungsformen der Eingriffselemente 15 bzw. der Klemmelemente 15a denkbar. Die Eingriffselemente 15 sind grundsätzlich zwischen einer eingerückten Stellung, in der die hydrodynamische Kupplung 13 in Eingriff mit der ersten Getriebeeingangswelle 9 ist, und einer ausgerückten Stellung, in der die hydrodynamische Kupplung 13 außer Eingriff mit der ersten Getriebeeingangswelle 9 ist, verstellbar. Wie aus Fig. 3 hervorgeht, sind die Eingriffselemente 15 in jeweiligen Aussparungen 16 eines Käfigs 17 aufgenommen, der zwischen der ersten Getriebeeingangswelle 9 und einem Außenring 18 der Schalteinrichtung 14 angeordnet ist. Der Käfig 17 dient zur Steuerung des Freilaufs, in dem er in der Lage ist, die Eingriffselemente 15 in jeweiligen definierten Positionen relativ zu dem Außenring 18 zu halten. In dem Außenring 18 befinden sich jeweilige Ausnehmungen 19, in welche die Eingriffselemente 15 eingreifen bzw. in welchen dieselben aufgenommen sind. Grundsätzlich klemmen die Eingriffselemente 15, wenn sie sich in der einen Position in den Ausnehmungen 19 befinden, wodurch ein Drehmoment zwischen der ersten Getriebeeingangswelle 9 und dem Außenring 18 übertragen wird. Beim Drehen in der entgegengesetzten Richtung laufen die Eingriffselemente 15 frei. Der Außenring 18 ist in nicht dargestellter Weise mit der Turbine 13a der hydrodynamischen Kupplung 13 verbunden.

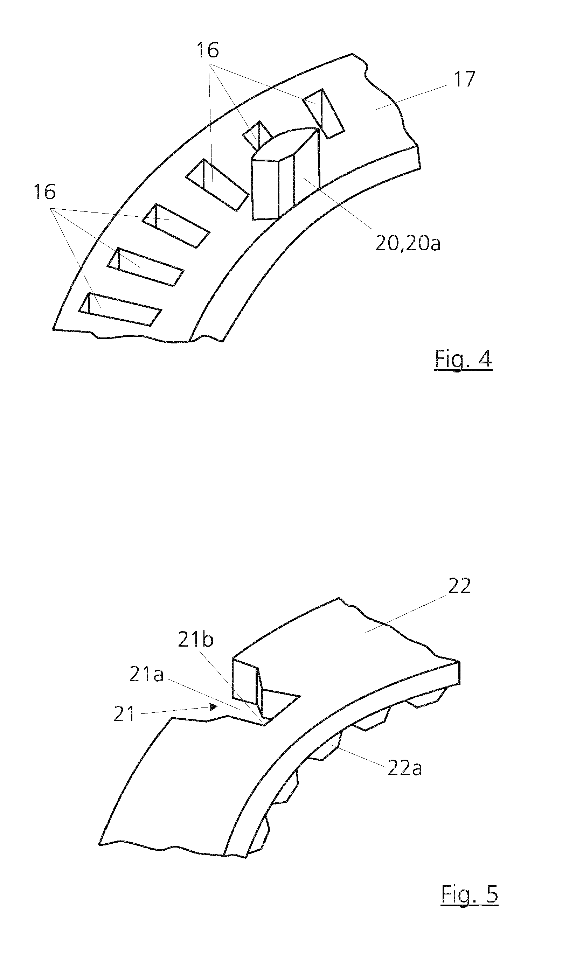

Um die Eingriffselemente 15 zu schalten, weist der Käfig 17 wenigstens einen Vorsprung 20 auf, der in Fig. 4 dargestellt ist und der zum Eingreifen in wenigstens eine Aussparung 21 in einem in Fig. 5 dargestellten Schaltelement 22 dient. Vorzugsweise sind um den Umfang der Schalteinrichtung 14 bzw. des Käfigs 17 mehrere Vorsprünge 20, beispielsweise drei Vorsprünge 20, angeordnet, die in eine entsprechende Anzahl von um den Umfang des Schaltelements 22 verteilt angeordneten Aussparungen 21 eingreifen. Im vorliegenden Fall ist der Vorsprung 20 als Nase 20a ausgebildet, es wäre in nicht dargestellter Weise jedoch auch möglich, den Vorsprung 20 als Rolle oder in anderer, geeigneter Weise auszuführen. Die Aussparung 21 weist wenigstens zwei Abschnitte 21 a und 21 b auf, die sich aneinander anschließen. Der Vorsprung 20 des Käfigs 17 ist in Abhängigkeit einer axialen Position des Schaltelements 22 zwischen den beiden Abschnitten 21 a und 21 b beweglich. Wenn sich der Vorsprung 20 in dem äußeren, der äußeren Kante des Schaltelements 22 zugeordneten Abschnitt 21 a befindet, ist ein Bewegen der Eingriffselemente 15 möglich und die Schalteinrichtung 14 nimmt die aktive Position ein. Wenn sich der Vorsprung 20 in dem inneren Abschnitt 21 b der Aussparung 21 befindet, wird ein Bewegen der Eingriffselemente 15 verhindert, sodass die Schalteinrichtung 14 die neutrale Position einnimmt. Der Käfig 17 mit den Vorsprüngen 20 kann beispielsweise durch eine kombinierte Stanz- und Schweißkonstruktion realisiert werden. Die Vorsprünge 20 begrenzen im Zusammenwirken mit den Aussparungen 21 die radiale Beweglichkeit des Käfigs 17 relativ zu dem Außenring 18. Falls beim Ineingriffgehen des Vorsprungs 20 mit der Aussparung 21 ein härterer Schlag auftreten sollte, so wird dieser nicht an die erste Getriebeeingangswelle 9 übertragen, da die hydrodynamische Kupplung 13 dazwischen geschaltet ist.

Das Schaltelement 22 ist als Ring ausgeführt und weist eine Innenverzahnung 22a auf, die mit einer Außenverzahnung 18a des Außenrings 18 der Schalteinrichtung 14 in Eingriff gebracht werden kann. Das Schaltelement 22 ist über die Innenverzahnung 22a also drehfest mit dem Außenring 18 verbunden. Um die Position des Vorsprungs 20 innerhalb der Aussparung 21 zu ändern, kann das als Schiebemuffe ausgebildete Schaltelement 22 gegenüber dem Außenring 18 in der mit "x" bezeichneten Axialrichtung bewegt werden. Hierzu kann das Schaltelement 22 beispielsweise hydraulisch betätigt werden. Statt der hydraulischen Betätigung des Schaltelements 22 ist grundsätzlich auch eine elektrische oder andersartige Betätigung desselben möglich.

Wenn die Eingriffselemente 15 über das Schaltelement 22 und den Käfig 17 in der Mitte der Ausnehmungen 19 des Außenrings 18 gehalten sind, ist die Schalteinrichtung 14 nicht aktiv. Wenn die Eingriffselemente mittels des Schaltelements 22 jedoch in eine Position gebracht werden, in der sie sich in den Ausnehmungen 19 bewegen können, klemmen die Eingriffselemente 15 wie oben beschrieben und übertragen ein Drehmoment. Dadurch ist die hydrodynamische Kupplung 13 mit der ersten Getriebeeingangswelle 9 in Eingriff. Letztendlich wird die hydrodynamische Kupplung 13 also über das Schaltelement 22 mit der ersten Getriebeeingangswelle 9 verbunden.

Ein Schaltvorgang innerhalb des Getriebes 1 wird wie folgt durchgeführt: Ein aktueller Gang wird direkt mit der Motorausgangswelle 7 verbunden, die Kupplung 6 ist geöffnet und der nächste Gang in dem entsprechenden Teilgetriebe 2 oder 3 eingelegt. Die Turbine 13a der hydrodynamischen Kupplung 13 befindet sich im neutralen Zustand. Zum Schalten wird zuerst die hydrodynamische Kupplung 13 aktiviert. Da der Drehmomenteinsatz sanft erfolgt, können die selbstlösenden Klauen der Schaltelemente des Getriebes durch eine gezielte Laststeuerung sanft und in ausreichender Zeit ausgerückt werden. Dann wird die Reibkupplung 6a geschlossen, wodurch die hydrodynamische Kupplung13 lastfrei mit umläuft. Die Schalteinrichtung 14 kann dann in einfacher Weise auf neutral geschaltet werden, wodurch sich kein negativer Einfluss auf den Wirkungsgrad ergibt. Mittels der hydrodynamischen Kupplung 13 sind demnach sanfte Schaltvorgänge bei einem geringen Steuerungsaufwand möglich und es ist, in ähnlicher Weise wie bei bekannten Automatikgetrieben, auch ein Kriechen möglich.

Während des Anfahrvorgangs ist die Reibkupplung 6a geöffnet. Die Reibkupplung 6a kann ab einem gewissen Grad der Angleichung der Drehzahlen zwischen der Motorausgangswelle 7 und der ersten Getriebeeingangswelle 9 geschlossen werden und übernimmt dann die Verbindung der Motorausgangswelle 7 mit der ersten Getriebeeingangswelle 9. Das Übergeben zwischen der hydrodynamischen Kupplung 13 und der Reibkupplung 6a kann dabei an unterschiedlichen Übergabegraden zwischen der Motorausgangswelle 7 und der ersten Getriebeeingangswelle 9 erfolgen, und zwar in Abhängigkeit davon, ob eine besonders komfortable oder eine besonders sportliche Fahrweise erwünscht ist. Selbstverständlich kann dies von einer entsprechenden Steuerungseinrichtung des Kraftfahrzeugs gesteuert werden und es ist gegebenenfalls auch möglich, den Zeitpunkt des Umschaltens zwischen der hydrodynamischen Kupplung 13 und der Reibkupplung 6a durch den Fahrer des Kraftfahrzeugs beeinflussbar auszuführen.

Grundsätzlich ist die Kupplungsanordnung 11 auch in anderen als dem hierin dargestellten und beschriebenen Getriebe 1 mit den beiden Teilgetrieben 2 und 3 einsetzbar. Neben dem Einsatz der Kupplungsanordnung 11 in den weiteren, in der EP 2 878 856 A1 beschriebenen Ausführungsformen von Getrieben ist beispielsweise auch die Verwendung der Kupplungsanordnung 11 in einem bekannten Doppelkupplungsgetriebe denkbar.

## Patentansprüche

1. Kupplungsanordnung (11) zur Verbindung eines Antriebsmotors (12) mit einem Getriebe (1), insbesondere einem wenigstens zwei Teilgetriebe (2,3) aufweisenden Getriebe (1), mit einer auf eine Getriebeeingangswelle (9) wirkenden Kupplung (6),
**gekennzeichnet durch**
eine parallel zu der Kupplung (6) wirkende hydrodynamische Kupplung (13), die mittels einer Schalteinrichtung (14) mit der Getriebeeingangswelle (9) in Eingriff bringbar ist.

2. Kupplungsanordnung nach Anspruch 1,
**dadurch gekennzeichnet, dass** die Schalteinrichtung (14) mehrere Eingriffselemente (15) aufweist, welche zwischen einer eingerückten Stellung, in der die hydrodynamische Kupplung (13) in Eingriff mit der Getriebeeingangswelle (9) ist, und einer ausgerückten Stellung, in der die hydrodynamische Kupplung (13) außer Eingriff mit der Getriebeeingangswelle (9) ist, verstellbar sind.

3. Kupplungsanordnung nach Anspruch 2,
**dadurch gekennzeichnet, dass** die Eingriffselemente (15) in jeweilige Ausnehmungen (19) eines Außenrings (18) der Schalteinrichtung (14) eingreifen.

4. Kupplungsanordnung nach Anspruch 2 oder 3,
**dadurch gekennzeichnet, dass** die Eingriffselemente (15) als Klemmelemente (15a) ausgebildet sind, welche in jeweiligen Aussparungen (16) eines Käfigs (17) aufgenommen sind.

5. Kupplungsanordnung nach Anspruch 4,
**dadurch gekennzeichnet, dass** die Klemmelemente (15a) als Rollen (15b) ausgebildet sind.

6. Kupplungsanordnung nach Anspruch 3, 4 oder 5,
**dadurch gekennzeichnet, dass** der Käfig (17) wenigstens einen Vorsprung (20) zum Eingreifen in wenigstens eine Aussparung (21) in einem Schaltelement (22) aufweist.

7. Kupplungsanordnung nach Anspruch 6,
**dadurch gekennzeichnet, dass** die wenigstens eine Aussparung (21) wenigstens zwei Abschnitte (21 a,21 b) aufweist, wobei der wenigstens eine Vorsprung (20) des Käfigs (17) in Abhängigkeit einer axialen Position des Schaltelements (22) zwischen den beiden Abschnitten (21 a,21 b) beweglich ist.

8. Kupplungsanordnung nach Anspruch 6 oder 7,
**dadurch gekennzeichnet, dass** der wenigstens eine Vorsprung (20) als Nase (20a) ausgebildet ist.

9. Kupplungsanordnung nach Anspruch 6 oder 7,
**dadurch gekennzeichnet, dass** der wenigstens eine Vorsprung (20) als Rolle ausgebildet ist.

10. Kupplungsanordnung nach einem der Ansprüche 6 bis 9,
**dadurch gekennzeichnet, dass** das Schaltelement (22) als Ring ausgebildet ist und eine Innenverzahnung (22a) aufweist, welche mit einer Außenverzahnung (18a) des Außenrings der Schalteinrichtung (14) in Eingriff bringbar ist.

11. Kupplungsanordnung nach Anspruch 10,
**dadurch gekennzeichnet, dass** das Schaltelement (22) gegenüber dem Außenring (18) in Axialrichtung beweglich ist.

12. Kupplungsanordnung nach Anspruch 11,
**dadurch gekennzeichnet, dass** das Schaltelement (22) mittels hydraulischer Betätigung beweglich ist.

13. Kupplungsanordnung nach einem der Ansprüche 1 bis 12,
**dadurch gekennzeichnet, dass** die Kupplung (6) als Reibkupplung (6a) ausgebildet ist.

14. Getriebe (1) mit wenigstens zwei Teilgetrieben (2,3), mit einer Getriebeeingangswelle (9), mit einer Getriebeausgangswelle (8) und mit einer Kupplungsanordnung (11) nach einem der Ansprüche 1 bis 13 zur Verbindung eines Antriebsmotors (12) mit dem Getriebe (1).

15. Verfahren zum Betreiben eines Getriebes nach Anspruch 14, wobei zum Anfahren und/oder zum Durchführen eines Gangwechsels die hydrodynamische Kupplung (13) mittels der Schalteinrichtung (14) aktiviert wird.
